# EUROPEAN PATENT APPLICATION

(11) **EP 4 535 074 A1**
(43) Date of publication of application: **09.04.2025**
(21) Application number: 24202081.6
(22) Date of filing: 24.09.2024
(51) Int. Cl.: G02F 1/13357, G02F 1/1335

(54) **DISPLAY DEVICE**

(30) Priority: 05.10.2023 KR 20230132204
(71) Applicant: LG Electronics Inc., Yeongdeungpo-gu Seoul 07336 (KR)
(72) Inventor: PARK, Kuenyoung, 06772 Seoul (KR); PARK, Jongmyeong, 06772 Seoul (KR)
(74) Representative: Vossius & Partner Patentanwälte Rechtsanwälte mbB

(57) **Abstract**

Disclosed is a display device (1). The display device of the present disclosure includes: a display panel (10); a frame (80) which has a pressed portion (81G) depressed relative to a flat plate portion (81F) in a rearward direction from the front surface of the plate (80), and which is located in a rear of the display panel (10); a heat sink plate (83) located between the display panel (10) and the frame (80); a substrate (40) located between the display panel (10) and the heat sink plate (83); and a plurality of light sources (51) located on the substrate (40), wherein the front surface of the frame (80) facing the display panel (10) includes a first area where the pressed portion (81G) is formed, and a second area excluding the first area where the flat plate portion (81F) is formed, wherein the heat sink plate (83) has an area smaller than an area of the front surface of the frame (80) and covers the first area, wherein the substrate (40) is located on the heat sink plate (83) and on the second area.

## Description

### CROSS-REFERENCE TO RELATED APPLICATION

This application claims the priority benefit of Korean Patent Application No. 10-2023-0132204, filed on October 5, 2023.

### BACKGROUND OF THE INVENTION

### Field of the invention

The present disclosure relates to a display device.

### Description of the Related Art

As information society develops, the demand for display devices is also increasing in various forms. In response to this, various display devices such as Liquid Crystal Display Device (LCD), Plasma Display Panel (PDP), Electro luminescent Display (ELD), Vacuum Fluorescent Display (VFD) have been researched and used in recent years.

Among these, a liquid crystal panel includes a TFT substrate and a color filter substrate that face each other with a liquid crystal layer interposed therebetween, and may display an image by using light provided from a backlight unit.

The LED substrates (i.e., LED arrays) of the backlight unit may be mounted on a heat sink plate, and the heat of the LED substrates may be transferred to the heat sink plate. However, the area of the heat sink plate is formed to be relatively large compared to an area occupied by the LED substrates, and as a result, the weight and manufacturing cost of the display device may be increased due to the heat sink plate.

### SUMMARY OF THE INVENTION

It is an objective of the present disclosure to solve the above and other problems. The present invention is specified by the independent claim. Preferred embodiments are defined by the dependent claims.

Another object of the present disclosure may be to provide a display device that can minimize the increase in weight and cost due to a heat sink plate.

Another object of the present disclosure may be to provide a display device including a split heat sink plate and a substrate located on the split heat sink plate and a frame.

Another object of the present disclosure may be to provide a structure that covers a pressed portion of the frame with a heat sink plate to prevent the substrate on the heat sink plate from floating from the pressed portion.

Another object of the present disclosure may be to provide a structure for coupling the heat sink plate to the frame.

Another object of the present disclosure may be to provide various examples of the shape and arrangement of the substrate located on the heat sink plate and the frame.

In accordance with an aspect of the present disclosure, a display device includes: a display panel; a frame which has a pressed portion, and is located in a rear of the display panel; a heat sink plate located between the display panel and the frame; a substrate located between the display panel and the heat sink plate; and a plurality of light sources located on the substrate, wherein a front surface of the frame facing the display panel includes: a first area where the pressed portion is formed; and a second area excluding the first area, wherein the heat sink plate has an area smaller than the front surface of the frame, and covers the first area, wherein the substrate is located on the heat sink plate and the second area.

The area of the plate may be less than or equal to half of the area of the front surface of the frame.

The pressed portion may be formed by pressing the front surface of the frame in a rearward direction.

The frame may comprise a recessed portion which is located around the pressed portion, and which may form a step lowered from the front surface of the frame. The plate may be located on the recessed portion and preferably located between the substrate and the pressed portion.

The recessed portion may be formed by pressing the front surface of the frame in a rearward direction.

The frame may comprise a pin hole formed at the recessed portion. The plate may comprise a pin which protrudes from a rear surface of the plate, and which may penetrate the pin hole. An end of the pin may be engaged to a rear surface of the recessed portion.

A gap between a rear surface of the substrate and a front surface of the recessed portion may be equal to or greater than a thickness of the plate.

The substrate may comprise a plurality of substrates adjacent to each other. Each of the plurality of substrates may comprise: a body preferably having a plate-shape; and a plurality of legs which protrudes from one side of the body, and which may be spaced apart from each other. The bodies of the plurality of substrates may be arranged in a zigzag manner on the frame.

The display device may further comprise an optical unit located between the display panel and the substrate; and a supporter which may be located between the optical unit and the substrate, and which may support a rear surface of the optical unit. The plate may comprise a coupling portion which is formed at the plate, and to which the supporter may be coupled.

The frame may further comprise a fixing portion which is formed by pressing the front surface of the frame in a rearward direction, and which may be spaced apart from the pressed portion. The coupling portion may be formed by pressing from a rear surface of the plate in a forward direction, and may overlap the fixing portion in a front-rear direction.

The frame may further comprise a frame coupling portion which is formed at the frame, and which may be spaced apart from the plate. The supporter may comprise: a first supporter coupled to the coupling portion; and a second supporter coupled to the frame coupling portion.

The display device may further comprise a reflective sheet covering a front surface of the substrate and has holes in which the plurality of light sources are located. The supporter may penetrate the reflective sheet and may be coupled to the coupling portion, and may press the reflective sheet toward the substrate.

The pressed portion may comprise a plurality of pressed portions intersecting each other. The plate may cover the plurality of pressed portions.

The plate may comprise a plurality of plates covering the plurality of pressed portions. The plurality of plates may comprise: a first plate; and a second plate preferably having the same shape as the first plate.

The plurality of plates may comprise horizontal plates formed elongated in a horizontal direction; and vertical plates formed elongated in a vertical direction. The horizontal plates may have the same shape. The vertical plates may have the same shape.

### BRIEF DESCRIPTION OF THE DRAWINGS

The above and other objects, features and advantages of the present disclosure will be more apparent from the following detailed description in conjunction with the accompanying drawings, in which:

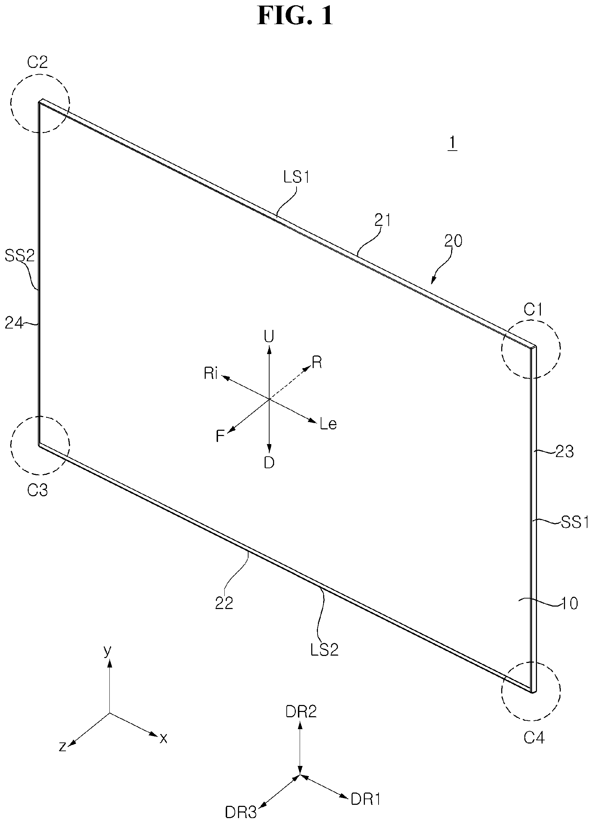

FIGS. 1 to 29 are diagrams illustrating examples of a display device according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the present application, it should be understood that the terms "comprises, includes," "has," etc. specify the presence of features, numbers, steps, operations, elements, components, or combinations thereof described in the specification, but do not preclude the presence or addition of one or more other features, numbers, steps, operations, elements, components, or combinations thereof.

Direction indications of up (U), down (D), left (Le), right (Ri), front (F), and rear (R) shown in the drawings are only for convenience of explanation, and the technical concept disclosed in this specification is not limited thereto.

Referring to FIG. 1, a display device 1 may include a display panel 10. The display panel 10 may display an image.

The display device 1 may include a first long side LS1, a second long side LS2 opposite to the first long side LS1, a first short side SS1 adjacent to the first and second long sides LS1 and LS2, and a second short side SS2 opposite to the first short side SS1. Meanwhile, for the convenience of description, it is illustrated that the length of the first and second long sides LS1 and LS2 are longer than the length of the first and second short sides SS1 and SS2, but it may also be possible that the length of the first and second long sides LS1 and LS2 are substantially equal to the length of the first and second short sides SS1 and SS2.

The direction parallel to the long sides LS1, LS2 of the display device 1 may be referred to as a left-right direction or a first direction DR1. A side of the first short side SS1 may be referred to as a left (Le, x), and a side of the second short side SS2 may be referred to as a right Ri.

The direction parallel to the short sides SS1, SS2 of the display device 1 may be referred to as an up-down direction or a second direction DR2. A side of the first long side LS1 may be referred to as an upper side (U, y), and a side of the second long side LS2 may be referred to as a lower side D.

The direction perpendicular to the long sides LS1, LS2 and the short sides SS1, SS2 of the display device 1 may be referred to as a front-rear direction or a third direction DR3. The direction in which the display panel 10 displays an image may be referred to as a forward direction (F, z), and the opposite direction may be referred to as a rearward direction R.

The first long side LS1, the second long side LS2, the first short side SS1, and the second short side SS2 may be referred to as edges of the display device 1. In addition, points where the first long side LS1, the second long side LS2, the first short side SS1, and the second short side SS2 meet each other may be referred to as corners.

A point where the first short side SS1 and the first long side LS1 meet may be referred to as a first corner C1. A point where the first long side LS1 and the second short side SS2 meet may be referred to as a second corner C2. A point where the second short side SS2 and the second long side LS2 meet may be referred to as a third corner C3. A point where the second long side LS2 and the first short side SS1 meet may be referred to as a fourth corner C4.

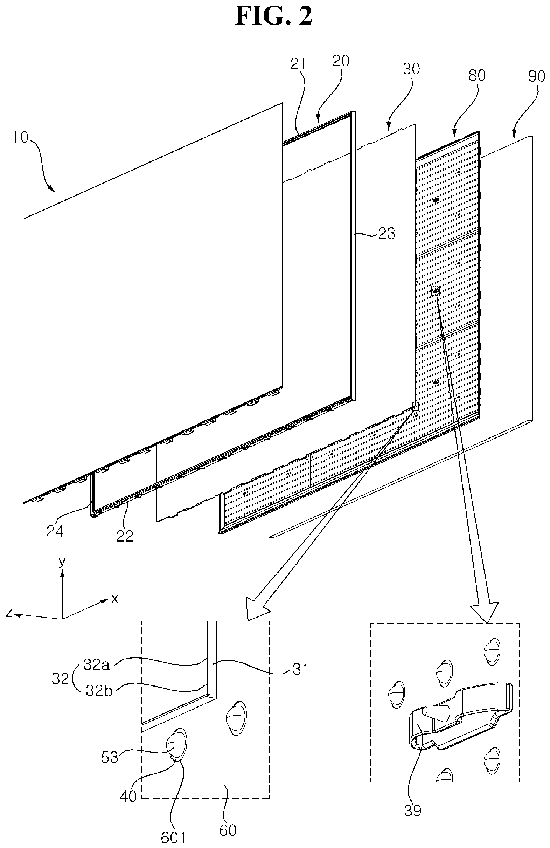

Referring to FIGS. 1 and 2, the display device 1 may include a display panel 10, a side frame 20, a backlight unit, a frame 80, and a back cover 90.

The display panel 10 may form the front surface of the display device 1, and display an image. The display panel 10 may display an image by having a plurality of pixels that output Red, Green, or Blue (RGB) for each pixel in accordance with a timing. The display panel 10 may be divided into an active area where an image is displayed and a de-active area where an image is not displayed. The display panel 10 may include a front substrate and a rear substrate that are opposite to each other with a liquid crystal layer interposed there-between. The display panel 10 may be referred to as an LCD panel 10.

The front substrate may include a plurality of pixels consisting of red, green, and blue sub-pixel. The front substrate may output light corresponding to the color of red, green, or blue according to a control signal.

The rear substrate may include switching elements. The rear substrate may switch a pixel electrode. For example, the pixel electrode may change the molecular arrangement of liquid crystal layer according to an externally input control signal. The liquid crystal layer may include liquid crystal molecules. The arrangement of liquid crystal molecules may change in response to a voltage difference generated between a pixel electrode and a common electrode. The liquid crystal layer may transmit or block light provided from the backlight unit to the front substrate.

The side frame 20 may extend along the edge of the display panel 10. The side frame 20 may cover the edge of the display panel 10. A first part 21 may cover the upper side of the display panel 10, and may form the first long side LS1. A second part 22 may cover the lower side of the display panel 10, and may form the second long side LS2. A third part 23 may cover the left side of the display panel 10, and may form the first short side SS1. A fourth part 24 may cover the right side of the display panel 10, and may form the second short side SS2. The side frame 20 may include a plastic or metal material, and may be referred to as a guide panel 20.

The backlight unit may be located in a rear of the display panel 10. The backlight unit may be located in front of the frame 80, and may be coupled to the frame 80. The backlight unit may be driven by a full drive method or a partial drive method such as local dimming, and impulsive. The backlight unit may include light sources that provide light in a forward direction, a substrate 40 on which the light sources are mounted, lenses 53 covering the light sources, a reflective sheet 60 covering the entire surface of the substrate 40, and an optical unit 30 located in front of the reflective sheet 60.

The optical unit 30 may be located opposite to the display panel 10 with respect to the side frame 20. The optical unit 30 may evenly transmit light from the light source to the display panel 10. The optical unit 30 may include a diffusion plate 31 and an optical sheet 32.

The diffusion plate 31 may be located between the reflective sheet 60 and the optical sheet 32. The diffusion plate 31 may diffuse the light from the light source. In addition, an air gap may be formed between the reflect sheet 60 and the diffusion plate 31. The air gap may serve as a buffer, and the light of the light source may be spread widely by the air gap. A supporter 39 may be located between the reflective sheet 60 and the diffusion plate 31, may be coupled to the reflective sheet 60, and may support the diffusion plate 31.

The optical sheet 32 may be adjacent to or in contact with the front surface of the diffusion plate 31. The optical sheet 32 may include at least one sheet. For example, the optical sheet 32 may include a plurality of sheets having a different function, and the plurality of sheets may be adhered to or in close contact with each other. For example, the first optical sheet 32a may be a diffusion sheet, and the second optical sheet 32b may be a prism sheet.

The frame 80 may be located in a rear of the backlight unit. The display panel 10, the side frame 20, and the backlight unit may be coupled to the frame 80. The frame 80 may support the components of the display device which is described above or described later. For example, the frame 80 may include a metal material such as aluminum alloy. The frame 80 may be referred to as a main frame 80, a module cover 80, or a cover bottom 80.

The back cover 90 may cover the rear of the frame 80, and may be coupled to the frame 80. The back cover 90 may be an injection molded product of resin. Alternatively, the back cover 90 may include metal materials.

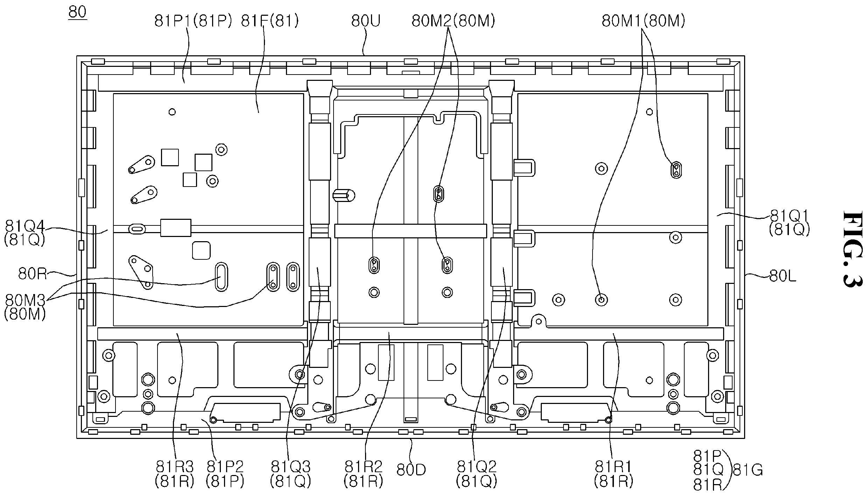

Referring to FIG. 3, a base 81 of the frame 80 may form the central portion of the frame 80. The base 81 may be opposite to the display panel 10 with respect to the optical unit 30. A flat plate portion 81F may form the front surface of the base 81. A pressed portion 81G may be formed by pressing the flat plate portion 81F in a rearward direction from the front surface. A plurality of pressed portions 81P, 81Q, and 81R may be spaced apart from each other. At least a portion of the plurality of pressed portions 81P, 81Q, and 81R may be connected to each other.

A horizontal pressed portion 81P may be a groove formed long in the horizontal direction. A first horizontal pressed portion 81P1 may be adjacent to the upper side 80U of the frame 80, and may extend along the upper side 80U. A second horizontal pressed portion 81P2 may be adjacent to the lower side 80D of the frame 80, and may extend along the lower side 80D.

A vertical pressed portion 81Q may be a groove formed long in the vertical direction. The vertical pressed portion 81Q may intersect the horizontal pressed portion 81P. A first vertical pressed portion 81Q1 may be adjacent to the left side 80L of the frame 80, and may extend along the left side 80L. A second vertical pressed portion 81Q2 may be located between the left side 80L of the frame 80 and a vertical line passing through the center of the frame 80, and be adjacent to the vertical line and extend along the vertical line. A third vertical pressed portion 81Q3 may be located between the right side 80R of the frame 80 and a vertical line passing through the center of the frame 80, and may be adjacent to the vertical line and extend along the vertical line. A fourth vertical pressed portion 81Q4 may be adjacent to the right side 80R of the frame 80, and may extend along the right side 80R.

A middle pressed portion 81R may be a groove formed long in the horizontal direction. The middle pressed portion 81R may intersect the vertical pressed portion 81Q. A first middle pressed portion 81R1 may be located between the first vertical pressed portion 81Q1 and the second vertical pressed portion 81Q2, and may be adjacent to the second horizontal pressed portion 81P2 and extend along the second horizontal pressed portion 81P2. A second middle pressed portion 81R2 may be located between the second vertical pressed portion 81Q2 and the third vertical pressed portion 81Q2, and may be adjacent to the second horizontal pressed portion 81P2 and extend along the second horizontal pressed portion 81P2. A third middle pressed portion 81R3 may be located between the third vertical pressed portion 81Q3 and the fourth vertical pressed portion 81Q4, and may be adjacent to the second horizontal pressed portion 81P2 and extend along the second horizontal pressed portion 81P2. The first middle pressed portion 81R1, the second middle pressed portion 81R2, and the third middle pressed portion 81R3 may be arranged in a row.

Accordingly, the pressed portion 81G may improve the rigidity of the frame 80. The pressed portion 81G may be referred to as a forming portion 81G or a bead 81G.

Meanwhile, a fixing portion 80M may be formed by pressing the front surface of the flat plate portion 81F in a rearward direction, and may be spaced apart from the pressed portion 81G. A first fixing portion 80M1 may be located between the first vertical pressed portion 81Q1 and the second vertical pressed portion 81Q2. A second fixing portion 80M2 may be located between the second vertical pressed portion 81Q2 and the third vertical pressed portion 81Q3. A third fixing portion 80M3 may be located between the third vertical pressed portion 81Q3 and the fourth vertical pressed portion 81Q4.

A plurality of boards P may be located in a rear of the frame 80, and may be electrically connected to the electronic components of the display device. For example, a power supply board may provide power to each component of the display device, and may be mounted on the first fixing portion 80M1 through a fastening member such as a screw. For example, a timing controller board may provide an image signal to the display panel 10, and may be mounted on the second fixing portion 80M2 through a fastening member such as a screw. For example, a main board may control each component of the display device, and may be mounted on the third fixing portion 80M3 through a fastening member such as a screw.

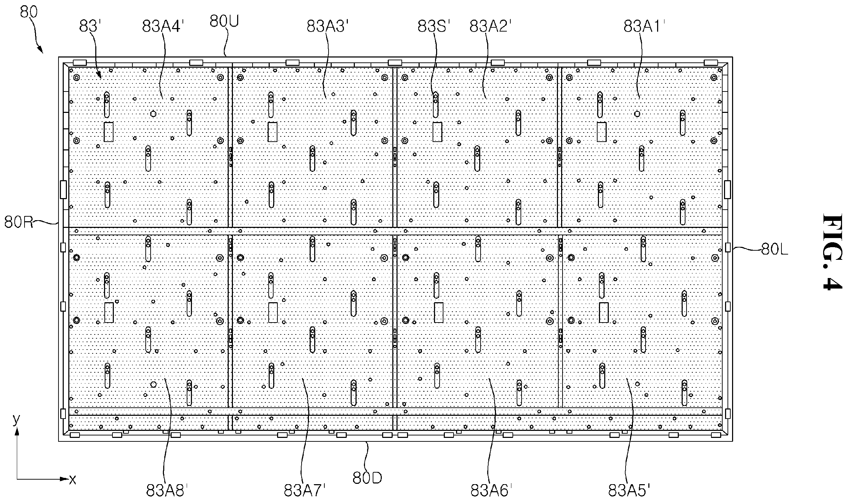

Referring to FIGS. 3 and 4, a heat sink plate 83' may cover the flat plate portion 81F and the pressed portion 81G of the base 81. The heat sink plate 83' may be coupled to the flat plate portion 81F. The heat sink plate 83' may include a metal material. The heat sink plate 83' may be a single plate, and has a plurality of areas 83A1', 83A2', 83A3', 83A4', 83A5', 83A6', 83A7', and 83A8'. The heat sink plate 83' may be referred to as a heat sink 83' or a plate 83'.

Meanwhile, a plurality of coupling portions 83s' may be formed on the heat sink plate 83', and each of the plurality of supports 39 (see FIG. 2) may be detachably coupled to each of the plurality of coupling portions 83s'.

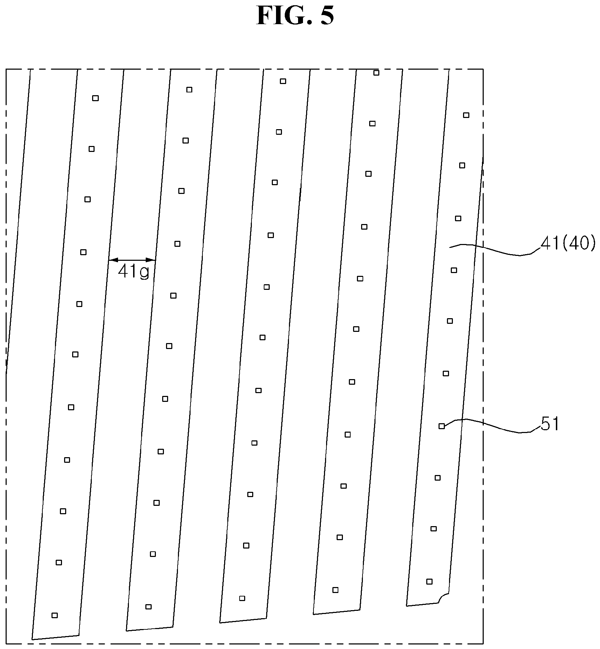

Referring to FIG. 5, the substrate 41 may be located on the front surface of the heat sink plate 83' (see FIG. 4). The substrate 41 may be coupled to or attached to the heat sink plate 83'. For example, the substrate 41 may be attached to the heat sink plate 83' through a double-sided tape. The substrate 41 may be a printed circuit board PCB. For example, the substrate 41 may include at least one of a polyethylene terephthalate PET, glass, polycarbonate PC, and silicon. The substrate 41 may be composed of a plurality of bars spaced apart from each other. The substrate 41 may be referred to as a substrate 40.

A light source 51 may be mounted on the front surface of the substrate 41. A plurality of light sources 51 may be arranged along each bar of the substrate 41. The light source 51 may be a Light Emitting Diode (LED) chip or an LED package. The light source 51 may be composed of a colored LED that emits at least one color among colors such as red, green, and blue, or of a white LED. The light source 51 may be a mini-LED. An electrode pattern may be formed on the substrate 41, and may connect an adapter (connector) and the light source 51. A power supply board may supply power to the light source 51 through the substrate 41. For example, the electrode pattern may be a carbon nanotube electrode pattern.

Meanwhile, a coupling portion 83s' (see FIG. 4) of the heat sink plate 83' may be disposed in a gap 41g between the substrates 41.

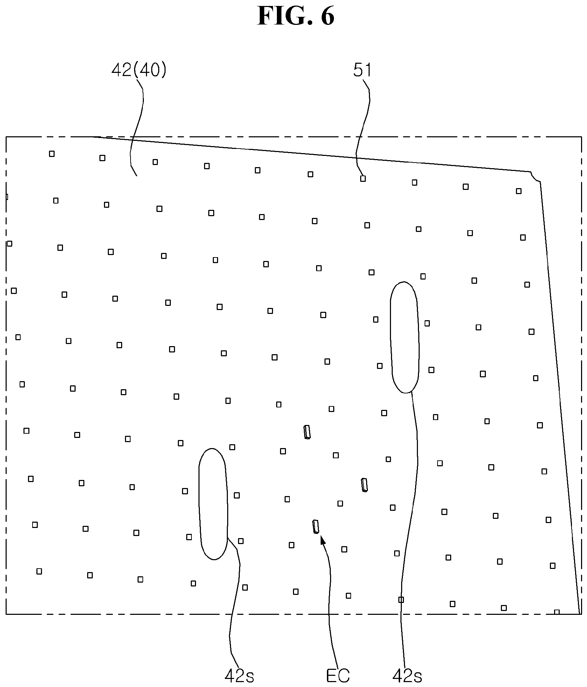

Referring to FIG. 6, the substrate 42 may be located on the front surface of the heat sink plate 83' (see FIG. 4). The substrate 42 may be coupled to or attached to the heat sink plate 83'. For example, the substrate 42 may be attached to the heat sink plate 83' through a double-sided tape. The substrate 42 may be a printed circuit board (PCB). For example, the substrate 42 may include at least one of polyethylene terephthalate (PET), glass, polycarbonate (PC), and silicon. The substrate 42 may have a plate shape, and may be provided as at least one substrate. The substrates 42 may cover a plurality of areas 83A1', 83A2', 83A3', 83A4', 83A5', 83A6', 83A7', and 83A8' of the heat sink plate 83. The substrate 42 may be referred to as a substrate 40.

The light source 51 may be mounted on the front surface of the substrate 42. A plurality of light sources 51 may be arranged in a matrix form on the front surface of the substrate 42. The light source 51 may be a Light Emitting Diode (LED) chip or an LED package. The light source 51 may be composed of a colored LED that emits at least one color among colors such as red, green, and blue, or of a white LED. The light source 51 may be a mini-LED. An electrode pattern may be formed on the substrate 42, and may connect an adapter (connector) and the light source 51. A power supply board may supply power to the light source 51 through the substrate 42. For example, the electrode pattern may be a carbon nanotube electrode pattern.

Meanwhile, a coupling portion 83s' (see FIG. 4) of the heat sink plate 83' may be disposed in a slot 42s formed in the substrate 42.

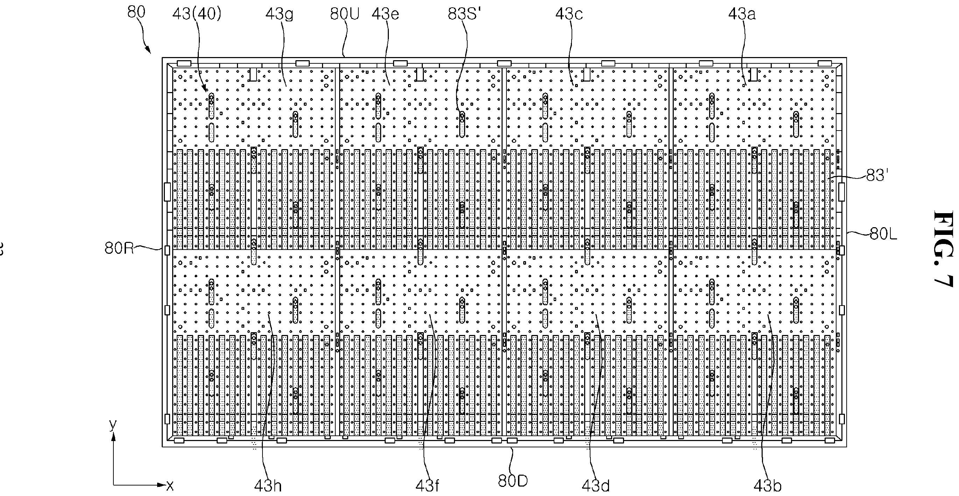

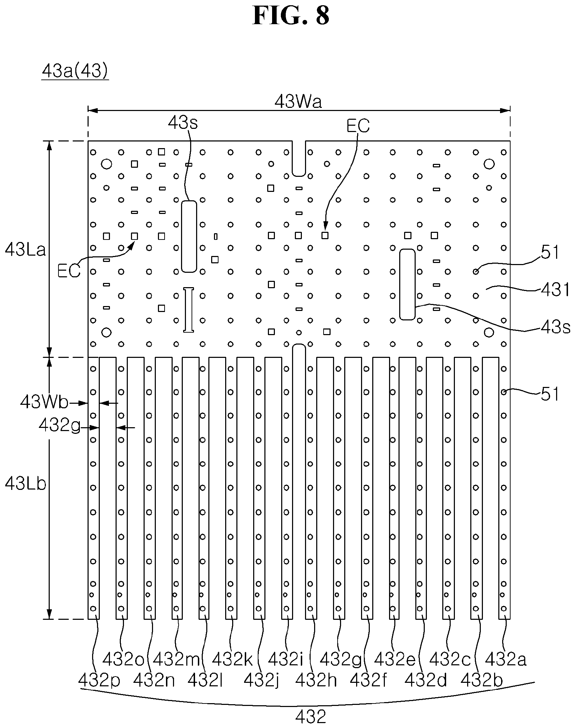

Referring to FIGS. 7 and 8, the substrate 43 may be located on the front surface of the heat sink plate 83' (see FIG. 4). The substrate 43 may be coupled to or attached to the heat sink plate 83'. For example, the substrate 43 may be attached to the heat sink plate 83' through a double-sided tape. The substrate 43 may be a printed circuit board (PCB). For example, the substrate 43 may include at least one of polyethylene terephthalate (PET), glass, polycarbonate (PC), and silicon. The substrate 43 may have a plate shape, and may be provided as at least one substrate. The substrates 43 may cover a plurality of areas 83A1', 83A2', 83A3', 83A4', 83A5', 83A6', 83A7', and 83A8' of the heat sink plate 83. The substrate 43 may be referred to as a substrate 40.

The substrate 43 may include a body 431 and legs 432. The body 431 may extend long, and have a certain width 43Wa. The legs 432 may extend longitudinally from one side of the body 431 in the longitudinal direction of the body 431, and may be spaced apart from each other in the width direction of the body 431. The length 43Lb of the leg 432 may be the same as or different from the length 43La of the body 431. For example, the width 43Wb of the leg 432 may be substantially equal to a gap 432g between the legs 432a, 432b, 432c, 432d, 432e, 432f, 432g, 432h, 432i, 432j, 432k, 432l, 432m, 432n, 432o, and 432p.

The light source 51 may be mounted on the front surface of the substrate 43. A plurality of light sources 51 may be arranged in a matrix form on the front surface of the body 431 and legs 432. The light source 51 may be a Light Emitting Diode (LED) chip or an LED package. The light source 51 may be composed of a colored LED that emits at least one color among colors such as red, green, and blue, or of a white LED. The light source 51 may be a mini-LED. An electrode pattern may be formed on the substrate 43, and may connect an adapter (connector) and the light source 51. A power supply board may supply power to the light source 51 through the substrate 43. For example, the electrode pattern may be a carbon nanotube electrode pattern.

Meanwhile, the coupling portion 83s' (see FIG. 4) of the heat sink plate 83' may be disposed in the slot 43s formed in the body 431 and/or the gap 432g between the legs 432.

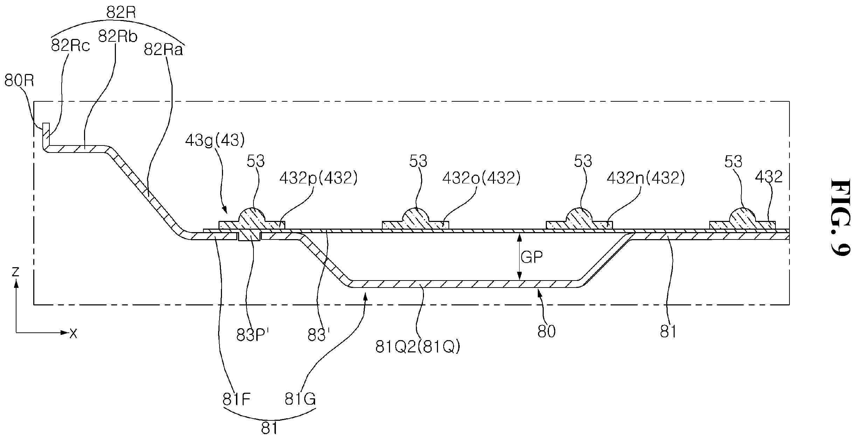

Referring to FIG. 9, the heat sink plate 83' may be located on the flat plate portion 81F of the frame 80. For example, a pin 83P' of the heat sink plate 83' may penetrate the flat plate portion 81F, and may be coupled to the flat plate portion 81F. Accordingly, the heat sink plate 83' may be coupled to the frame 80. The gap GP may be formed between the heat sink plate 83' and the pressed portion 81G.

The frame 80 may include a right inclined portion 82Ra, a right horizontal portion 82Rb, and a right vertical portion 82Rc. The right inclined portion 82Ra may extend inclined forward from the right side of the base 81. The angle between the front surface of the base 81 and the right inclined portion 82Ra may be an obtuse angle. The right horizontal portion 82Rb may be bent in the horizontal direction from the distal end of the right inclined portion 82Ra. The right vertical portion 82Rc may be bent forward from the distal end of the right horizontal portion 82Rb. The left inclined portion, the left horizontal portion, and the left vertical portion may be formed in the left side of the base 81 of the frame 80, and may be symmetrical in the left-right direction with the right inclined portion 82Ra, the right horizontal portion 82Rb, and the right vertical portion 82Rc.

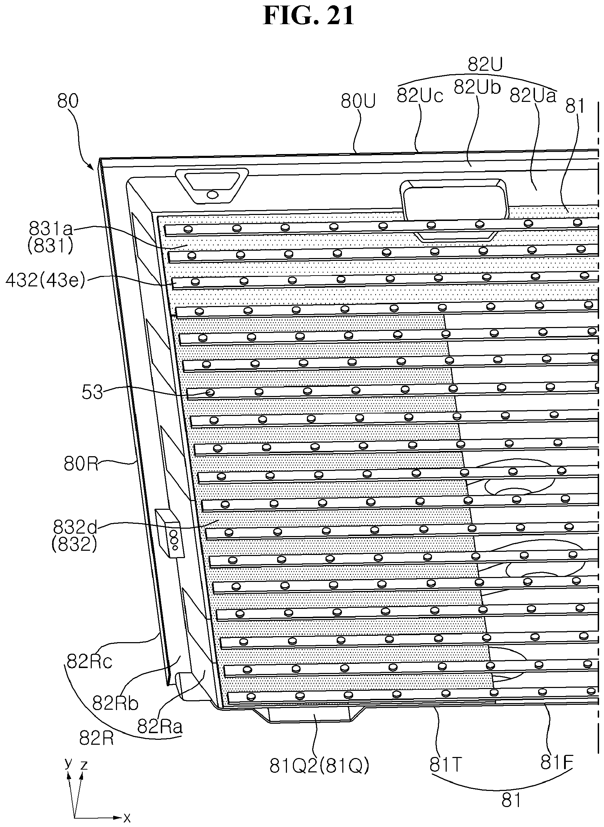

The frame 80 may include an upper inclined portion 82Ua, an upper horizontal portion 82Ub, and an upper vertical portion 82Uc (see FIG. 21). The upper inclined portion 82Ua may extend obliquely forward from the upper side of the base 81. The angle between the front surface of the base 81 and the upper inclined portion 82Ua may be an obtuse angle. The upper horizontal portion 82Ub may be bent in the horizontal direction from the distal end of the upper inclined portion 82Ua. The upper vertical portion 82Uc may be bent forward from the distal end of the upper horizontal portion 82Ub. The lower inclined portion, the lower horizontal portion, and the lower vertical portion may be formed in the lower side of the base 81 of the frame 80, and may be symmetrical in the left-right direction with the upper inclined portion 82Ua, the upper horizontal portion 82Ub, and the upper vertical portion 82Uc.

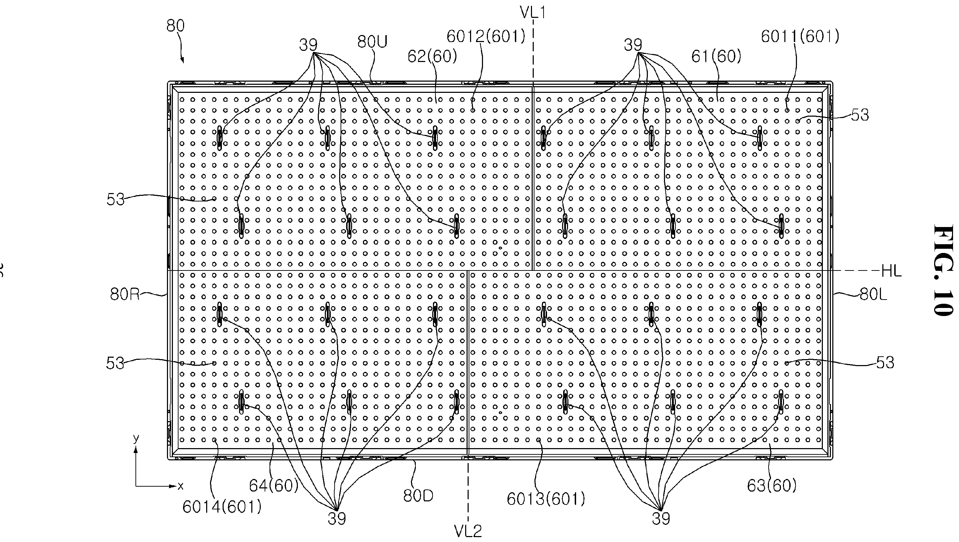

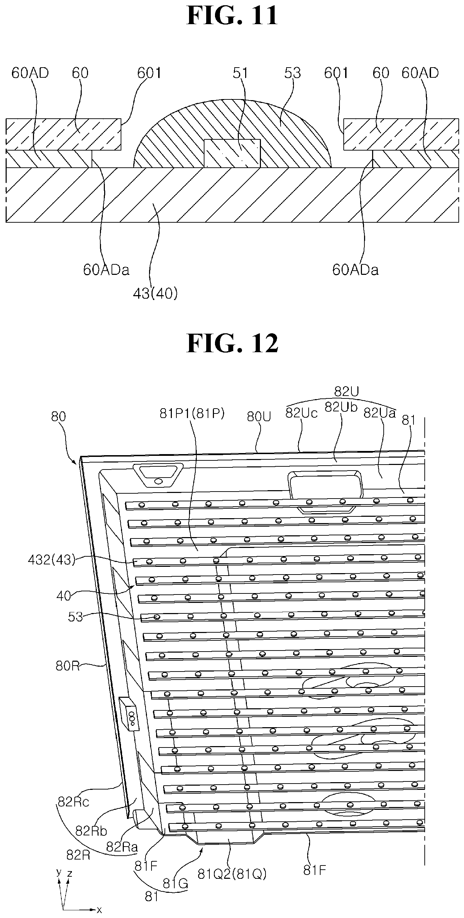

Referring to FIGS. 10 and 11, the reflective sheet 60 may cover the substrate 40. The reflective sheet 60 may be coupled onto the substrate 40. The reflective sheet 60 may be attached to the front surface of the substrate 40 through an adhesive member 60AD such as a double-sided tape. Alternatively, an adhesive may be applied to the rear surface of the reflective sheet 60. A hole 601 may be formed in the reflective sheet 60, and the light source 51 or the lens 53 covering the light source 51 may be located in the hole 601. Here, the lens 53 may be detachably coupled to the substrate 40, and may be provided with a groove for accommodating the light source 51. Alternatively, the lens 53 may be formed by curing a resin or silicone solution dispensed toward the light source 51. The number of holes 601 may be equal to the number of light sources 51 or lenses 53.

The reflective sheet 60 may reflect light provided from the light source 51 or reflected from the diffusion plate 31 (see FIG. 2) in a forward direction. For example, the reflective sheet 60 may include a metal having a high reflectivity, such as at least one of aluminum Al, silver Ag, gold Au, and titanium dioxide TiO2 and/or a metal oxide. For example, resin may be deposited or coated on the reflective sheet 60.

At least one reflective sheet 60 may be provided. A plurality of reflective sheets 60 may cover the substrate 40. For example, a first reflective sheet 61, a second reflective sheet 62, a third reflective sheet 63, and a fourth reflective sheet 64 may cover the front surface of the substrate 40.

The first reflective sheet 61 may be adjacent to the left side 80L and the upper side 80U of the frame 80, and may be quadrangle. The second reflective sheet 62 may be adjacent to the right side 80R and the upper side 80U of the frame 80, and may be quadrangle. A first vertical line VL1 may extend along the boundary between the first reflective sheet 61 and the second reflective sheet 62.

The third reflective sheet 63 may be adjacent to the left side 80L and the lower side 80D of the frame 80, and may be quadrangle. The fourth reflective sheet 64 may be adjacent to the right side 80R and the lower side 80D of the frame 80, and may be quadrangle. A second vertical line VL2 may extend along the boundary between the third reflective sheet 63 and the fourth reflective sheet 64.

The horizontal line HL may extend along the boundary between the first and second reflective sheets 61 and 62 and the third and fourth reflective sheets 63 and 64. The first vertical line VL1 and the second vertical line VL2 may be spaced apart from each other in the horizontal direction.

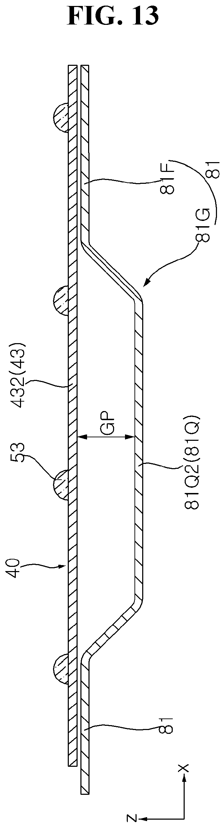

Referring to FIGS. 12 and 13, when the heat sink plate is removed from between the frame 80 and the substrate 40, a first portion of the substrate 40 is located on the flat plate portion 81F of the frame 80, but a second portion of the substrate 40 may be spaced apart from the pressed portion 81G of the frame 80 (see reference numeral GP in FIG. 13). In this case, while the heat from the first portion of the substrate 40 is easily transferred to the frame 80, the heat from the second portion of the substrate 40 may not be easily transferred to the frame 80. That is, the area corresponding to the second portion of the substrate 40 may be at a relatively high temperature, which may deteriorate the image quality of the display.

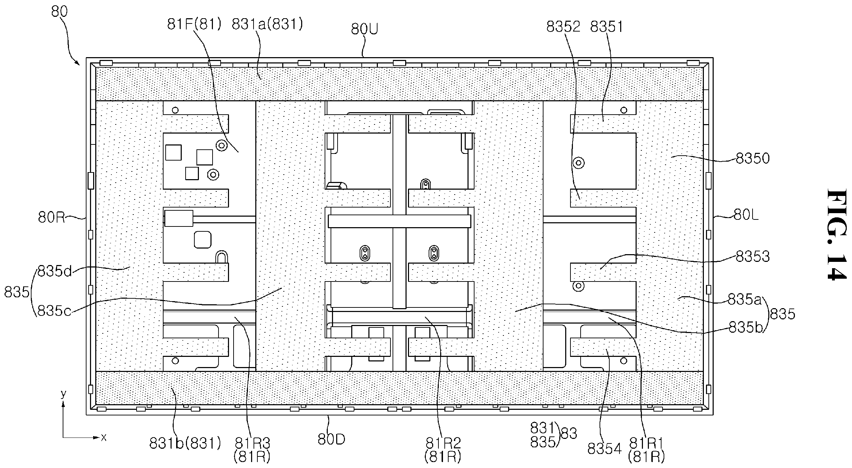

Referring to FIGS. 14 to 16 together with FIG. 3, the heat sink plate 83 may cover a portion of the base 81 of the frame 80. The heat sink plate 83 may be coupled to the flat plate portion 81F of the base 81. The heat sink plate 83 may include a metal material. The area of the heat sink plate 83 may be smaller than the area of the base 81, and the base 81 may include a portion not covered by the heat sink plate 83. For example, the area of the heat sink plate 83 may be 40 to 60% of the area of the base 81. For example, the area of the heat sink plate 83 may be 50% or less of the area of the base 81. The heat sink plate 83 may be located to correspond to the pressed portion 81G of the base 81, and cover at least a portion of the pressed portion 81G. At least one heat sink plate 83 may be provided. A plurality of heat sink plates 83 may be provided separately from each other. Alternatively, at least a portion of the plurality of heat sink plates 83 may be formed as one body. The heat sink plate 83 may be referred to as a heat sink 83 or a plate 83.

Accordingly, the heat sink plate 83 may improve the rigidity of the frame 80. A display device equipped with the heat sink plate 83 may reduce weight and manufacturing costs compared to a display device equipped with the heat sink plate 83' (see FIG. 4) that covers all or most of the base 81 of the frame 80.

Referring to FIG. 14 together with FIG. 3, the heat sink plate 83 may include a horizontal heat sink plate 831 and a vertical heat sink plate 835.

The horizontal heat sink plate 831 may extend longitudinally in the horizontal direction. A first horizontal heat sink plate 831a may extend along the first horizontal pressed portion 81P1, and cover at least a portion of the first horizontal pressed portion 81P1. A second horizontal heat sink plate 831b may extend along the second horizontal pressed portion 81P2, and cover at least a portion of the second horizontal pressed portion 81P2. For example, the first and the second horizontal heat sink plates 831a and 831b may have the same horizontal bar shape.

The vertical heat sink plate 835 may extend longitudinally in the vertical direction. The first vertical heat sink plate 835a may extend along the first vertical pressed portion 81Q1, and may extend at least a portion of the first vertical pressed portion 81Q1. The second vertical heat sink plate 835b may extend along the second vertical pressed portion 81Q2, and cover at least a portion of the second vertical pressed portion 81Q2. Third vertical heat sink plate 835c may extend along the third vertical pressed portion 81Q3, and cover at least a portion of the third vertical pressed portion 81Q3. The fourth vertical heat sink plate 835d may extend along the fourth vertical pressed portion 81Q4, and cover at least a portion of the fourth vertical pressed portion 81Q4. For example, the first to fourth vertical heat sink plates 835a, 835b, 835c, and 835d may have the same fork shape. Here, the fork-shaped vertical heat sink plate 835 may include a body 8350 that is long in the longitudinal direction of the vertical heat sink plate 835 and legs 8351, 8352, 8353, and 8354 that protrude from one long side of the body 8350. For example, the legs 8351, 8352, 8353, and 8354 of the first and second vertical heat sink plates 835a and 835b may face the right, and the legs 8351, 8352, 8353, and 8354 of the third and fourth vertical heat sink plates 835c and 835d may face the left.

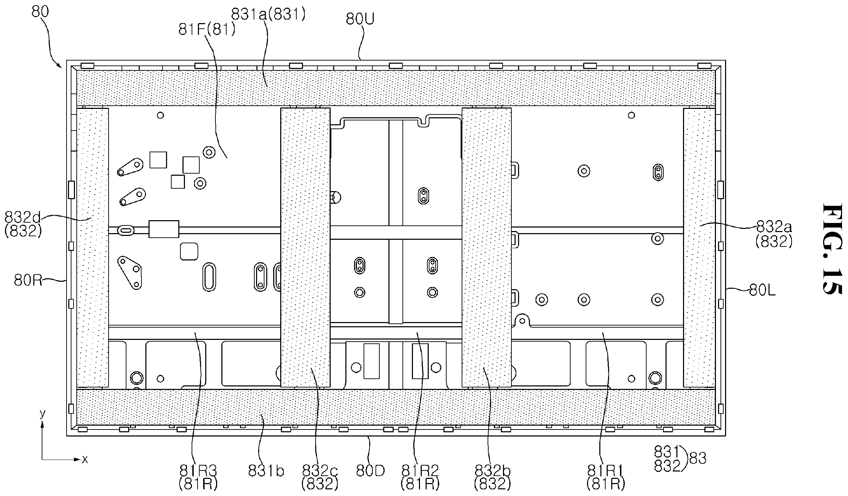

Referring to FIG. 15 together with FIG. 3, the heat sink plate 83 may include a vertical heat sink plate 832 instead of the vertical heat sink plate 835 of FIG. 14.

The vertical heat sink plate 832 may extend longitudinally in the vertical direction. A first vertical heat sink plate 832a may extend along the first vertical pressed portion 81Q1, and may extend at least a portion of the first vertical pressed portion 81Q1. A second vertical heat sink plate 832b may extend along the second vertical pressed portion 81Q2, and cover at least a portion of the second vertical pressed portion 81Q2. A third vertical heat sink plate 832c may extend along the third vertical pressed portion 81Q3, and cover at least a portion of the third vertical pressed portion 81Q3. A fourth vertical heat sink plate 832d may extend along the third vertical pressed portion 81Q3, and cover at least a portion of the fourth vertical pressed portion 81Q4. For example, the first to fourth vertical heat sink plates 832a, 832b, 832c, and 832d may have the same vertical bar shape.

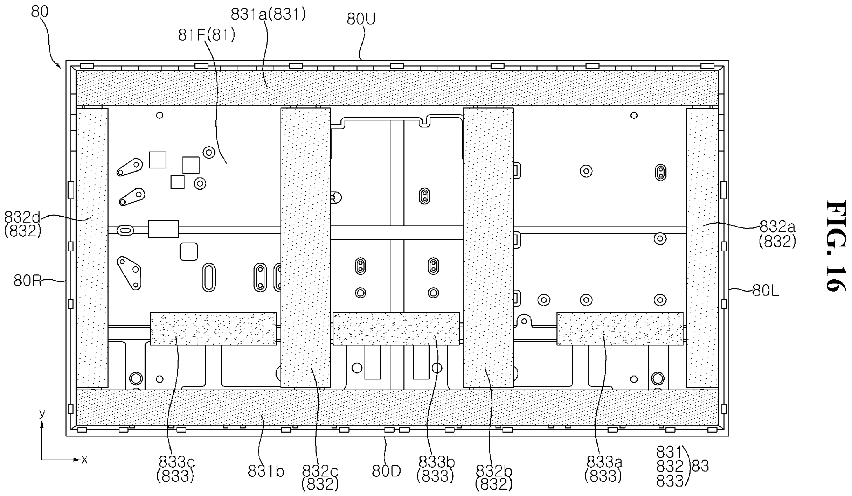

Referring to FIG. 16 together with FIG. 3, the heat sink plate 83 may further include a middle heat sink plate 833 along with the horizontal heat sink plate 831 and the vertical heat sink plate 832 of FIG. 15.

The middle heat sink plate 833 may extend longitudinally in the horizontal direction. A first middle heat sink plate 833a may extend along the first middle pressed portion 81R1, and may extend at least a portion of the first middle pressed portion 81R1. A second middle heat sink plate 833b may extend along the second middle pressed portion 81R2, and cover at least a portion of the second middle pressed portion 81R2. A third middle heat sink plate 833c may extend along the third middle pressed portion 81R3, and may cover at least a portion of the third middle pressed portion 81R3.

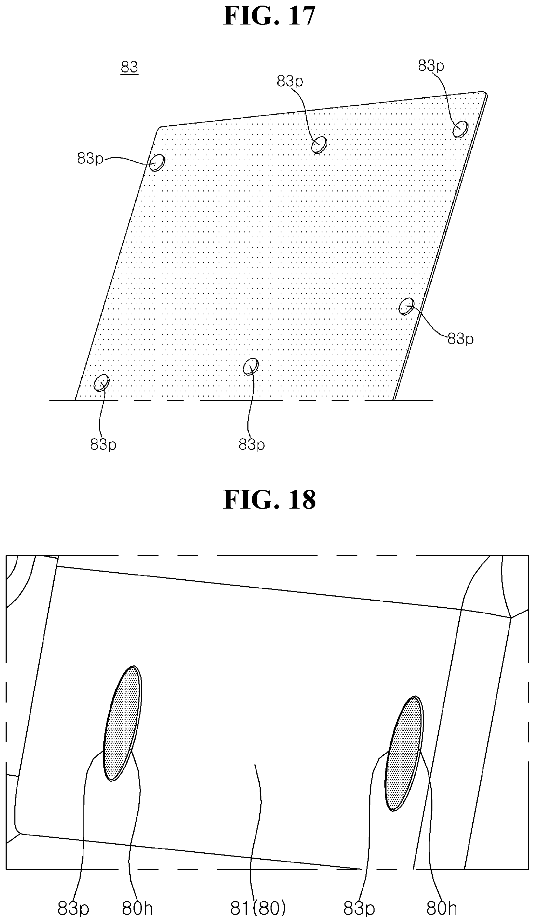

Referring to FIGS. 17 and 18, a pin 83p may protrude rearward from the rear surface of the heat sink plate 83. A plurality of pins 83p may be spaced apart from each other on the heat sink plate 83.

A pin hole 80h may be formed in the base 81 of the frame 80, and may be aligned with the pin 83p. Each of the plurality of pins 83p may penetrate each of the plurality of pin holes 80h. A user or a mechanical device may deform the distal end of the pin 83p penetrating the pin hole 80h by hitting it with a hammer or forming die, and the distal end of the deformed pin 83p may be hooked to the rear surface of the base 81. That is, the pin 83p may serve as a rivet. In addition, the edge of distal end of the deformed pin 83p may be caulked. Accordingly, the heat sink plate 83 may be coupled to the base 81 of the frame 80.

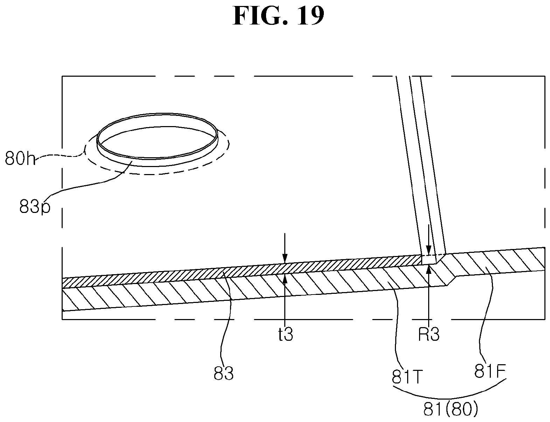

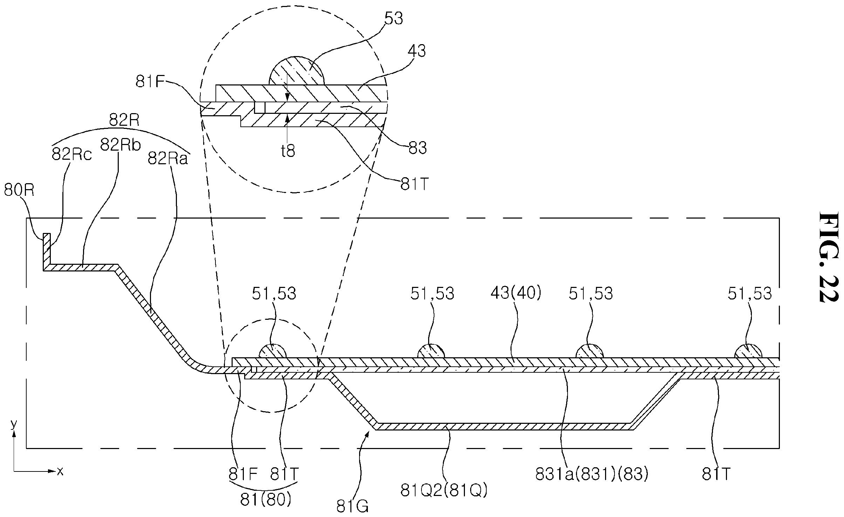

Referring to FIG. 19, a recessed portion 81T may form a step difference that is lowered in a rearward direction from the front surface of the flat plate portion 81F. The recessed portion 81T may be formed by pressing the front surface of the flat plate portion 81F in a rearward direction. The recessed portion 81T may be formed around the pressed portion 81G, and may form a step difference that is lower than the pressed portion 81G with respect to the flat plate portion 81F (see FIG. 22). The recessed portion 81T may be referred to as a step portion 81T.

The pin hole 80h may be formed in the recessed portion 81T of the base 81. The heat sink plate 83 may be located on the recessed portion 81T, and the pin 83 of the heat sink plate 83 may penetrate the pin hole 80h of the recessed portion 81T and be coupled to the recessed portion 81T.

Accordingly, the heat sink plate 83 may be coupled to the recessed portion 81T of the base 81. The distance R3 (i.e., step difference) between the front surface of the flat plate portion 81F and the front surface of the recessed portion 81T may be equal to or greater than the thickness t3 of the heat sink plate 83 on the recessed portion 81T. For example, the thickness t3 may be smaller than the distance R3, and in this case, even if the heat sink plate 83 is not flat, the front surface of the heat sink plate 83 may not further protrude in a forward direction than the front surface of the flat plate portion 81F.

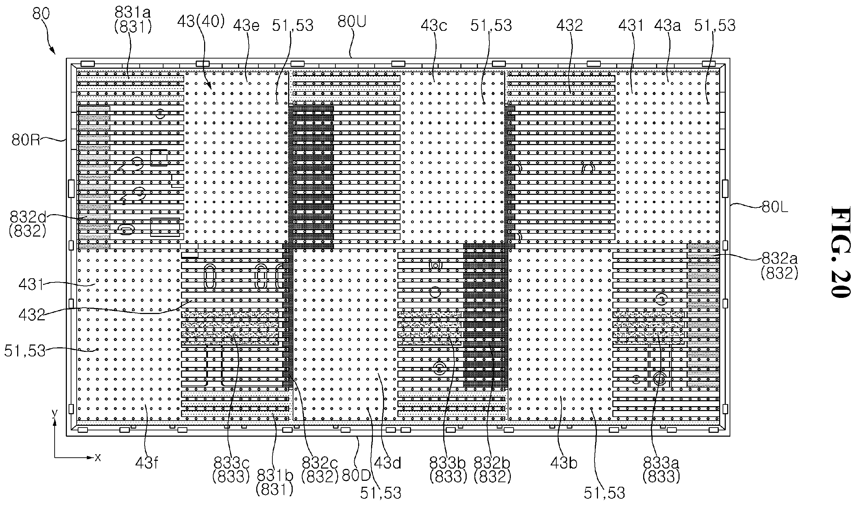

Referring to FIGS. 20 and 21, a plurality of heat sink plates 831, 832, and 833 may be located on the front surface of the base 81 of the frame 80, and a plurality of substrates 43 may be located on a portion of the base 81 that is not covered by the plurality of heat sink plates 831, 832, and 833 and on the plurality of heat sink plates 831, 832, and 833. The plurality of substrates 43 may be coupled or attached to the portion of the base 81 and the plurality of heat sink plates 831, 832, and 833. For example, the plurality of substrates 43 may be attached to the portion of the base 81 and the plurality of heat sink plates 831, 832, and 833 through a double-sided tape.

The legs 432 of the substrate 43 may face the horizontal direction or the vertical direction (see FIG. 7). For example, a first substrate 43a, a third substrate 43c, and a fifth substrate 43e may be arranged in a row adjacent to the upper side 80U of the frame 80. and the less 432 of the first substrate 43a, the third substrate 43c. and the fifth substrate 43e may face the right. For example, a second substrate 43b, a fourth substrate 43d, and a sixth substrate 43f may be arranged in a row adjacent to the lower side 80D of the frame 80, and the legs 432 of the second substrate 43b, the fourth substrate 43d, and the sixth substrate 43f may face the left. Alternatively, various types of substrates, such as a bar-shaped substrate 41 (see FIG. 5) or a plate-shaped substrate 42 (see FIG. 6), may replace the substrate 43.

Meanwhile, devices EC such as capacitor, integrated device, or Zener diode may be mounted on the body 431 of the substrate 43. The area corresponding to the body 431 may have a relatively high temperature compared to the area corresponding to the legs 432. The reflective sheet 60 on the body 431 may be lifted slightly in a forward direction by the devices EC compared to the reflective sheet 60 on the legs 432.

As shown in FIG. 20, the bodies 431 of the plurality of substrates 43 may be arranged in a zigzag manner, and may minimize the effect of imbalance between the body 431 and the legs 432 influenced on the image quality of the display.

Referring to FIG. 22, the heat sink plate 83 may cover the pressed portion 81Q. The first portion of the substrate 40 may be located on the flat plate portion 81F of the base 81, and a second portion of the substrate 40 may face the heat sink plate 83 located on the recessed portion 81T. Accordingly, the heat sink plate 83 may prevent the substrate 40 from floating with respect to the pressed portion 81Q. In addition, the heat of the first portion of the substrate 40 may be easily transferred to the flat plate portion 81F, and the heat of the second portion of the substrate 40 may also be easily transferred to the heat sink plate 83, thereby improving the image quality of display.

The gap t8 between the rear surface of the second portion of the substrate 40 and the front surface of the recessed portion 81T may be equal to or greater than the thickness of the heat sink plate 83. Accordingly, the first portion and the second portion of the substrate 40 may be located on the same plane. That is, the distance between the light source 51 and the optical unit 30 (see FIG. 3) on the first portion of the substrate 40 and the distance between the light source 51 and the optical unit 30 on the second portion of the substrate 40 may be the same. In addition, the stability of the coupling of the substrate 40 to the frame 80 and the heat sink plate 83 may be improved.

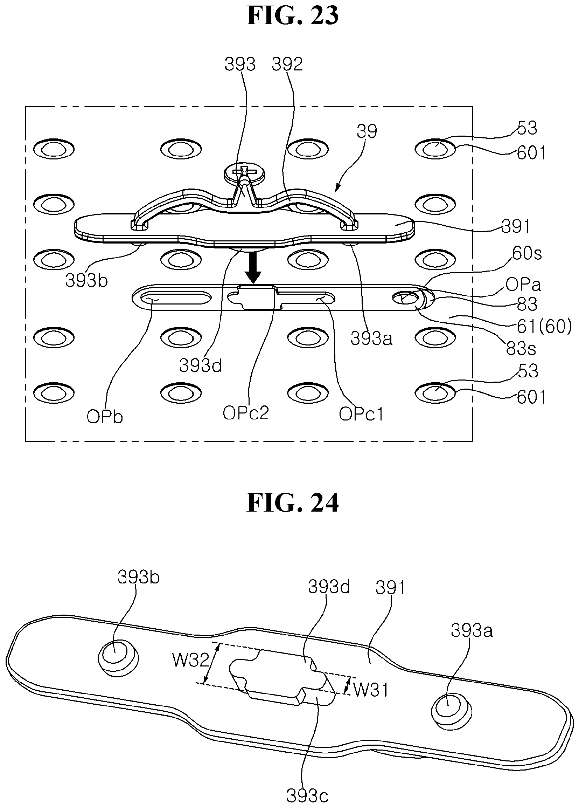

Referring to FIGS. 23 and 24, a coupling portion 83s may be formed on the heat sink plate 83. The coupling portion 83s may be formed by pressing the rear surface of heat sink plate 83 in a forward direction. The coupling portion 83s may be formed to be longitudinal in the horizontal or vertical direction. The coupling portion 83s may include a first hole OPa, a second hole OPb, an insertion hole OPc1, and an insertion groove OPc2.

The first hole OPa may be adjacent to one end of the coupling portion 83s, and may be formed to penetrate the coupling portion 83s. The first hole OPa may be a round hole.

The second hole OPb may be adjacent to the other end of the coupling portion 83s, and may be formed to penetrate the coupling portion 83s. The second hole OPb may be a hole that is long in the longitudinal direction of the coupling portion 83s.

The insertion hole OPc1 may be located between the first hole OPa and the second hole OPb, and may be formed to penetrate the coupling portion 83s. The insertion hole OPc1 may be located closer to the second hole OPb than the first hole OPa. The insertion hole OPc1 may be a long hole in the longitudinal direction of the coupling portion 83s.

The insertion groove OPc2 may be formed in a portion forming the boundary of the insertion hole OPc1 of the coupling portion 83s. A first portion (no reference numeral) of the insertion groove OPc2 may be formed from a first long side of the insertion hole OPc1 of the coupling portion 83s to the inside of the coupling portion 83s. A second portion (no reference numeral) of the insertion groove OPc2 may be formed from a second long side of the insertion hole OPc1 of the coupling portion 83s to the inside of the coupling portion 83s. The first portion and the second portion may be located closer to the second hole OPb than the first hole OPa.

The reflective sheet 60 may cover the heat sink plate 83, and may be coupled to the heat sink plate 83. The reflective sheet 60 may be provided with holes 601 where the lenses 53 are located and slots 60s where the coupling portions 83 are located.

The supporter 39 may include a body 391, a shoulder 392, a head 393, and legs 393a, 393b, 393c, and 393d. The supporter 39 may contain material such as plastic or resin, and may have elasticity.

The body 391 may have a long bar shape in the longitudinal direction of the coupling portion 83s. The shoulder 392 may have a semicircular shape having a recessed central portion as a whole, and one end and the other end of the shoulder 392 may be fixed to the front surface of the body 391. The head 393 may protrude forward from the central portion of the shoulder 392. The legs 393a, 393b, 393c, and 393d may protrude rearward from the rear surface of the body 391. The legs 393a, 393b, 393c, and 393d may include a first stopper 393a, a second stopper 393b, a protrusion 393c, and a hooking portion 393d.

A first stopper 393a may be adjacent to one end of the body 391. The diameter of the first hole OPa may be equal to or slightly larger than the diameter of the first stopper 393a.

A second stopper 393b may be adj acent to the other end of the body 391. The length of the minor axis of the second hole OPb may be equal to or slightly larger than the diameter of the second stopper 393b. The length of the long axis of the second hole OPb may be larger than the diameter of the second stopper 393b.

The protrusion 393c may be located between the first stopper 393a and the second stopper 393b. The protrusion 393c may be formed to be long in the left-right direction in the longitudinal direction of the body 391. The length of the short side of the insertion hole OPc1 may be equal to or slightly larger than the width W31 of the protrusion 393c. The length of the major axis of the insertion hole OPc1 may be larger than the length of the protrusion 393c.

The hooking portion 393d may be formed in both side surfaces of the protrusion 393c. The hooking portion 393d may be formed parallel to the rear surface of the protrusion 393c (see W32 in FIG. 13). The distance between the first portion and the second portion of the insertion groove OPc2 may be equal to or slightly larger than the width W32 of the hooking portion 393d.

The supporter 39 may be located in front of the coupling portion 83s. The second stopper 393b may be inserted into one side of the second hole OPb. The hooking portion 393d may be inserted into the insertion groove OPc2. At this time, the first stopper 393a may be located between the insertion hole OPc1 and the first hole OPa, and may contact the front surface of the coupling portion 83s.

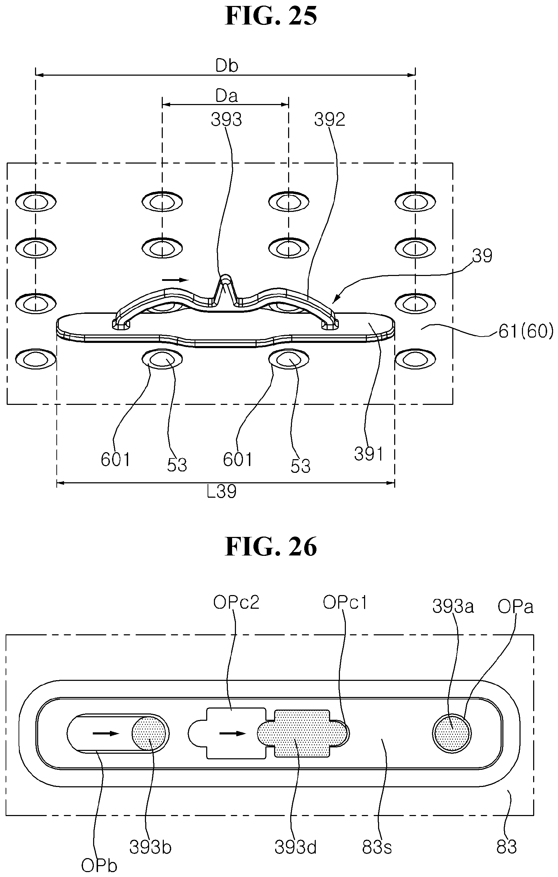

Referring to FIGS. 25 and 26, the second stopper 393b may be moved from one side of the second hole OPb to the opposite side. The protrusion 393c may be moved from one side of the insertion hole OPc1 to the opposite side. The first stopper 393a may be moved from the front surface of the coupling portion 83s toward the first hole OPa, and may be inserted into the first hole OPa. At this time, the hooking portion 393d may be hooked to the rear surface of the coupling portion 83s.

Accordingly, a user may couple the supporter 39 to or separate the supporter 39 from the coupling portion 83s in a slide manner. In addition, the width of the body 31 of the supporter 39 may be larger than the width of the slot 60s (see FIG.23) of the reflective sheet 60. That is, the supporter 39 may press the front surface of the reflective sheet 60.

The length L39 of the supporter 39 may be larger than the gap Da between the lenses 53 in the longitudinal direction of the supporter 39. The length L39 of the supporter 39 may be larger than twice the gap Da but smaller than three times the gap Db. For example, the first to fourth lenses 53 may be arranged in a row in the horizontal direction.

In this case, one end of the supporter 39 may be located between the first lens 53 and the second lens 53 and be close to the first lens 53, and the other end of the supporter 39 may be located between the third lens 53 and the fourth lens 53 and be close to the fourth lens 53.

Each of the plurality of supporters 39 (see FIG. 2) may be detachably coupled to each of the plurality of coupling portions 83s. The number and arrangement of supports 39 provided in the display device may be variably determined in consideration of the size of the display panel 10 and the installation environment.

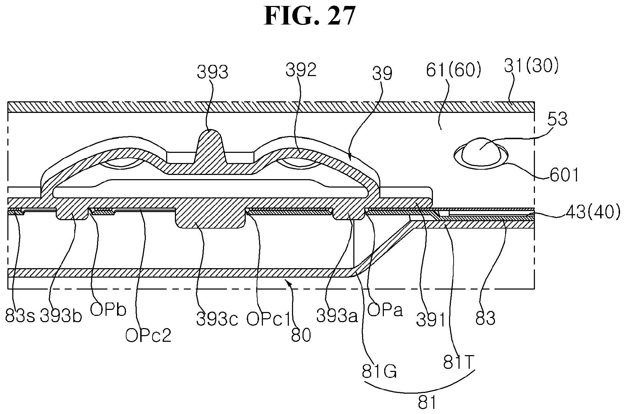

Referring to FIG. 27, the supporter 39 may be located between the reflective sheet 60 and the diffusion plate 31 of the optical unit 30. The head 393 of the supporter 39 may be adjacent to the rear surface of the diffusion plate 31. The rear surface of the diffusion plate 31 may be in contact with the head 393, and may be supported by the head 393.

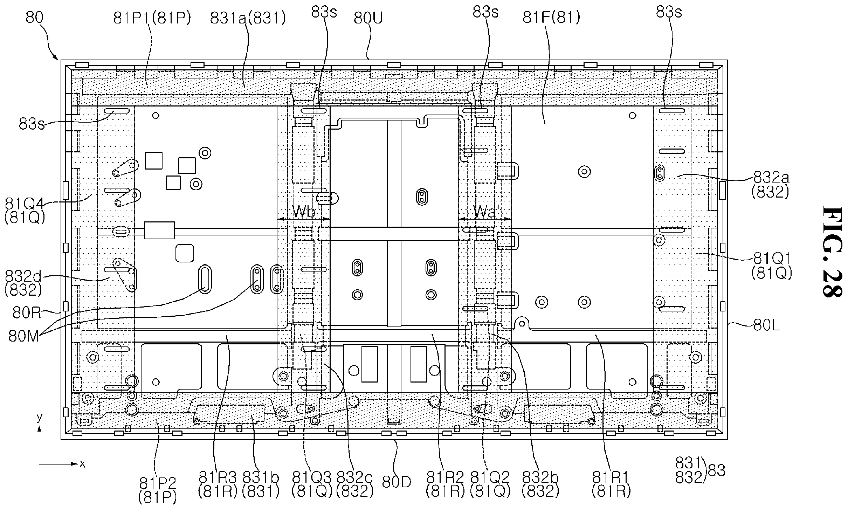

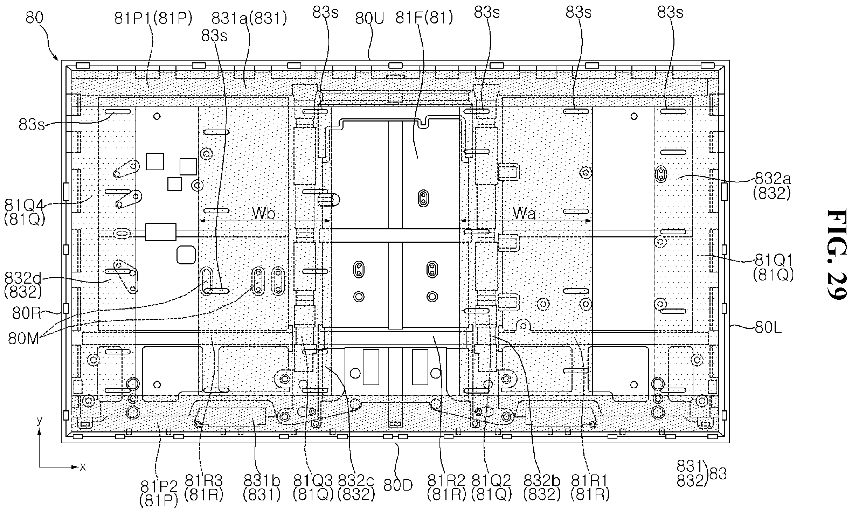

Referring to FIGS. 28 and 29, the length and width of the heat sink plate 83 may be determined in consideration of the arrangement of the supporter 39. A plurality of coupling portions 83s may be formed in the plurality of vertical heat sink plates 832 The widths (see Wa. Wb) of the plurality of vertical heat sink plates 832 may be the same or different from each other.

For example, with reference to FIG. 28, the fixing portion 80M may be located in the area of the base 81 between the third vertical heat sink 832c and the fourth vertical heat sink 832d, and may be formed by pressing the front surface of the flat plate portion 81F of the base 81 in a rearward direction. The coupling portion 83s may not be located in the area of the base 81 where the fixing portion 80M is located. Alternatively, the coupling portion 83s may be located in the area of the base 81 where the fixing portion 80M is located, and the coupling portion 83s may be formed by pressing the rear surface of the flat plate portion 81F in a forward direction. The coupling portion 83s formed in the heat sink plate 83 may be referred to as a first coupling portion 83s or a heat sink plate coupling portion 83s, and the coupling portion 83s formed in the flat plate portion 81F may be referred to as a second coupling portion 83s or a frame coupling portion 83s.

For another example with reference to FIG. 29, the coupling portion 83s may be located in the area of the base 81 where the fixing portion 80M is located, and overlap the fixing portion 80M in the front-rear direction. In this case, since the fixing portion 80M is already formed in the flat plate portion 81F, the coupling portion 83s may not be formed in the flat plate portion 81F. The width Wb of the third vertical heat sink plate 832c in FIG. 29 may be increased to cover the fixing portion 80M, and the coupling portion 83s may be formed by pressing the rear surface of the third vertical heat sink plate 832c in a forward direction at a position corresponding to the fixing portion 80M.

Referring to FIGS. 1 to 29, a display device according to an aspect of the present disclosure may include: a display panel; a frame which has a pressed portion, and is located in a rear of the display panel; a heat sink plate located between the display panel and the frame; a substrate located between the display panel and the heat sink plate; and a plurality of light sources located on the substrate, wherein a front surface of the frame facing the display panel may include: a first area where the pressed portion is formed; and a second area excluding the first area, wherein the heat sink plate may have an area smaller than an area of the front surface of the frame, and covers the first area, wherein the substrate may be located on the heat sink plate and the second area.

The area of the heat sink plate may be less than or equal to half of the area of the front surface of the frame.

The pressed portion may be formed by pressing the front surface of the frame in a rearward direction.

The frame may include a recessed portion which is located around the pressed portion, and forms a step difference lowered from the front surface of the frame, and the heat sink plate may be located on the recessed portion and located between the substrate and the pressed portion.

The recessed portion may be formed by pressing the front surface of the frame in a rearward direction.

The frame includes a pin hole formed at the recessed portion, and the heat sink plate may include a pin which protrudes from a rear surface of the heat sink plate and penetrates the pin hole, wherein a distal end of the pin may be hooked to a rear surface of the recessed portion.

A gap between a rear surface of the substrate and a front surface of the recessed portion may be equal to or greater than a thickness of the heat sink plate.

The substrate may include a plurality of substrates adjacent to each other, wherein each of the plurality of substrates may include: a body having a plate-shape; and a plurality of legs which protrudes from one side of the body, and are spaced apart from each other, wherein the bodies of the plurality of substrates may be arranged zigzagly on the frame.

The display device may further include an optical unit located between the display panel and the substrate; and a supporter which is located between the optical unit and the substrate, and supports a rear surface of the optical unit, and the heat sink plate may include a coupling portion which is formed at the heat sink plate, and to which the supporter is coupled.

The frame may further include a fixing portion which is formed by pressing the front surface of the frame in a rearward direction, and spaced apart from the pressed portion, and the coupling portion is formed by pressing from a rear surface of the heat sink plate in a forward direction, and overlaps the fixing portion in a front-rear direction.

The frame may further include a frame coupling portion which is formed at the frame, and spaced apart from the heat sink plate, and the supporter may include: a first supporter coupled to the coupling portion; and a second supporter coupled to the frame coupling portion.

The display device may further include a reflective sheet covering a front surface of the substrate and has holes where the plurality of light sources are located, and the supporter may penetrate the reflective sheet and is coupled to the coupling portion, and may press the reflective sheet toward the substrate.

The pressed portion may include a plurality of pressed portions intersecting each other, and the heat sink plate may cover the plurality of pressed portions.

The heat sink plate may include a plurality of heat sink plates covering the plurality of pressed portions, wherein the plurality of heat sink plates may include: a first heat sink plate; and a second heat sink plate having the same shape as the first heat sink plate.

The plurality of heat sink plates may include: horizontal heat sink plates formed elongated in a horizontal direction; and vertical heat sink plates formed elongated in a vertical direction, wherein the horizontal heat sink plates may have the same shape, and the vertical heat sink plates may have the same shape.

The effects of the display device according to the present disclosure will be described as follows.

According to at least one of the embodiments of the present disclosure, it is possible to provide a display device that can minimize the increase in weight and cost due to a heat sink plate.

According to at least one of the embodiments of the present disclosure, it is possible to provide a display device including a split heat sink plate and a substrate located on the split heat sink plate and a frame.

According to at least one of the embodiments of the present disclosure, it is possible to provide a structure that covers a pressed portion of the frame with a heat sink plate to prevent the substrate on the heat sink plate from floating from the pressed portion.

According to at least one of the embodiments of the present disclosure, it is possible to provide a structure for coupling the heat sink plate to the frame.

According to at least one of the embodiments of the present disclosure, it is possible to provide various examples of the shape and arrangement of the substrate located on the heat sink plate and the frame.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

Although embodiments have been described with reference to a number of illustrative embodiments thereof, it should be understood that numerous other modifications and embodiments may be devised by those skilled in the art that will fall within the scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A display device (1) comprising:
a display panel (10);
a frame (80) including a pressed portion (81G) and positioned behind the display panel (10);
a plate (83) located between the display panel (10) and the frame (80);
a substrate (40) located between the display panel (10) and the plate (83); and
a plurality of light sources (51) located on the substrate (40),
wherein a front surface of the frame (80) facing the display panel (10) comprises:
a first area at which the pressed portion (81G) is formed; and
a second area excluding the first area,
wherein the plate (83) has an area smaller than an area of the front surface of the frame (80), and covers the first area,
wherein the substrate (40) is located on the plate (83) and the second area.

2. The display (1) device of claim 1, wherein the area of the plate (83) is less than or equal to half of the area of the front surface of the frame (83).

3. The display device (1) of claim 1 or 2, wherein the pressed portion (81G) is formed by pressing the front surface of the frame (80) in a rearward direction.

4. The display device (1) of any one of claims 1 to 3, wherein the frame (80) comprises a recessed portion (81T) which is located around the pressed portion (81G), and which forms a step lowered from the front surface of the frame (80),
wherein the plate (83) is located on the recessed portion (81T) and located between the substrate (40) and the pressed portion (81G).

5. The display device (1) of claim 4, wherein the recessed portion (81T) is formed by pressing the front surface of the frame (80) in a rearward direction.

6. The display device (1) of claim 4 or 5, wherein the frame (80) comprises a pin hole (80h) formed at the recessed portion (81T),
wherein the plate (83) comprises a pin (83p) which protrudes from a rear surface of the plate (83) and which penetrates the pin hole (80h),
wherein an end of the pin (83p) is engaged to a rear surface of the recessed portion (81T).

7. The display device (1) of any one of claims 4 to 6, wherein a gap (t8) between a rear surface of the substrate (40) and a front surface of the recessed portion (81T) is equal to or greater than a thickness of the plate (83).

8. The display device (1) of any one of claims 1 to 7, wherein the substrate (40) comprises a plurality of substrates (43) adjacent to each other,
wherein each of the plurality of substrates (43) comprises:
a body (431) having a plate-shape; and
a plurality of legs (432) which protrudes from one side of the body (431), and which are spaced apart from each other,
wherein the bodies (431) of the plurality of substrates (43) are arranged zigzagly on the frame (80).

9. The display device (1) of any one of claims 1 to 8, further comprising:
an optical unit (30) located between the display panel (10) and the substrate (40); and
a supporter (39) which is located between the optical unit (30) and the substrate (40), and which supports a rear surface of the optical unit (30),
wherein the plate (83) comprises a coupling portion (83s) which is formed at the plate (83), and to which the supporter (39) is coupled.

10. The display device (1) of claim 9, wherein the frame (80) further comprises a fixing portion (80M) which is formed by pressing the front surface of the frame (80) in a rearward direction, and which is spaced apart from the pressed portion (81G),
wherein the coupling portion (83s) is formed by pressing from a rear surface of the plate (83) in a forward direction, and overlaps the fixing portion (80M) in a front-rear direction.

11. The display device (1) of claim 9 or 10, wherein the frame (80) further comprises a frame coupling portion which is formed at the frame (80), and which is spaced apart from the plate (83),
wherein the supporter (39) comprises:
a first supporter coupled to the coupling portion (83s); and
a second supporter coupled to the frame coupling portion.

12. The display device (1) of claim 9 or 10, further comprising a reflective sheet (60) covering a front surface of the substrate (40) and has holes (601) in which the plurality of light sources (51) are located,
wherein the supporter (39) penetrates the reflective sheet (60) and is coupled to the coupling portion (83s), and presses the reflective sheet (60) toward the substrate (40).

13. The display device (1) of any one of claims 1 to 12, wherein the pressed portion (81G) comprises a plurality of pressed portions (81G) intersecting each other,
wherein the plate (83) covers the plurality of pressed portions (81G).

14. The display device (1) of claim 13, wherein the plate (83) comprises a plurality of plates (83) covering the plurality of pressed portions (81G),
wherein the plurality of plates (83) comprise:
a first plate; and
a second plate having the same shape as the first plate.

15. The display device (1) of claim 14, wherein the plurality of plates (83) comprise:
horizontal plates (831) formed elongated in a horizontal direction; and
vertical plates (835) formed elongated in a vertical direction,
wherein the horizontal plates (831) have the same shape, and
wherein the vertical plates (835) have the same shape.
